# DEMANDE DE BREVET EUROPEEN

(11) **EP 1 496 468 A1**
(43) Date de publication de la demande: **12.01.2005**
(21) Numéro de dépôt: 03291724.7
(22) Date de dépôt: 11.07.2003
(51) Int. Cl.: G06K 19/07

(54) **Procédé de gestion d'une mémoire dans un objet portatif du type mixte**

(71) Demandeur: Axalto S.A., 92120 Montrouge (FR)
(72) Inventeur: Barbe, Serge, 78117 Chateaufort (FR)
(74) Mandataire: Renault, Patricia Marie Jacqueline

(57) **Abrégé**

L'invention conceme un procédé de gestion d'une mémoire dans un objet portatif du type « mixte » dont les moyens de connexion à un appareil hôte associé comprennent à la fois des contacts galvaniques et des moyens de connexion à distance définissant ainsi un mode de fonctionnement dit mode « contacts » et un mode de fonctionnement dit mode « sans contacts », ces deux modes de fonctionnement étant éventuellement simultanés, caractérisé en ce qu'il comprend les étapes consistant à :
- lors de toute demande d'effacement d'un bloc mémoire, différer l'effacement et affecter à ce bloc mémoire un attribut de « bloc mémoire à effacer », si l'objet portatif est dans le seul mode « sans contacts » ; puis
- lors d'un futur passage en mode « contacts », déclencher l'effacement de tout ou partie des blocs mémoire possédant l'attribut de « bloc mémoire à effacer ».

## Description

L'invention est relative à un procédé de gestion d'une mémoire dans un objet portatif du type « mixte », c'est-à-dire dont les moyens de connexion à un appareil hôte associé comprennent à la fois des contacts galvaniques et une antenne de liaison à distance. De façon connue en soi, un tel objet, qui peut notamment prendre la forme d'une carte à puce (telle qu'une carte de crédit, une carte SIM utilisée dans les téléphones portables, etc...), inclut des moyens de traitement de l'information et une mémoire non volatile associée. L'invention s'intéresse au cas où la mémoire non volatile inclut une partie de mémoire présentant les caractéristiques suivantes :
- l'opération d'écriture dans la mémoire exige un effacement préalable de la mémoire, mais elle s'effectue en un temps court ;
- l'opération d'effacement s'effectue en un temps long et réclame une quantité importante d'énergie électrique.

L'invention vise en particulier les mémoires du type "flash".

Le mode « sans contacts » d'un objet portatif tel qu'une carte à puce mixte comporte notamment les contraintes spécifiques suivantes :
- la vitesse de la transaction réalisée entre la carte et son appareil hôte doit être élevée ;
- le niveau d'énergie électrique disponible dans la carte est faible.

Si l'on met en regard ces contraintes et les caractéristiques de la mémoire flash, on constate que cette mémoire est appropriée pour équiper une carte mixte quant à sa vitesse d'écriture, mais pas quant à son effacement.

L'invention se fixe comme but de proposer un procédé de gestion de l'effacement d'une mémoire flash, qui permette d'équiper un objet portatif mixte d'une telle mémoire.

Selon l'invention, on décide de n'effectuer, en mode « sans contacts », que des opérations de lecture/écriture de la mémoire, réservant au seul mode « contacts » les opérations d'effacement, sauf éventuellement dans le cas où ces deux modes sont activés simultanément. On a pu constater que cette solution donne satisfaction, le mode « contacts » autorisant effectivement la fourniture de l'énergie électrique importante nécessitée par cet effacement, et pendant un temps important.

Plus précisément, l'invention concerne un procédé de gestion d'une mémoire dans un objet portatif du type « mixte » dont les moyens de connexion à un appareil hôte associé comprennent à la fois des contacts galvaniques et des moyens de connexion à distance définissant ainsi un mode de fonctionnement dit mode « contacts » et un mode de fonctionnement dit mode « sans contacts », ces deux modes de fonctionnement étant éventuellement simultanés, caractérisé en ce qu'il comprend les étapes consistant à :
- lors de toute demande d'effacement d'un bloc mémoire, différer l'effacement et affecter à ce bloc mémoire un attribut de « bloc mémoire à effacer », si l'objet portatif est dans le seul mode « sans contacts » ; puis
- lors d'un futur passage en mode « contacts », déclencher l'effacement de tout ou partie des blocs mémoire possédant l'attribut de « bloc mémoire à effacer ».

Avantageusement, le procédé comprend l'étape consistant, lors de toute demande d'écriture dans un bloc mémoire déterminé, à :
- renoncer à l'écriture de ce bloc mémoire s'il stocke déjà une donnée et si l'objet portatif est dans le seul mode « sans contacts » ;
- rechercher un bloc mémoire vierge et effectuer l'écriture dans celui-ci.
Avantageusement, le procédé comprend l'étape supplémentaire consistant à affecter audit bloc mémoire déterminé un attribut de « bloc mémoire à effacer » si l'objet portatif est dans le seul mode « sans contacts ».

D'autres détails et avantages de la présente invention apparaîtront au cours de la description suivante d'un exemple de mise en oeuvre.

Dans cet exemple, l'objet portatif est une carte à puce qui possède une mémoire flash dans laquelle sont définies, pour le mode « sans contacts » seulement, deux tables, une table dite « table active » et une table dite « table d'effacement ». La table active contient l'adresse de tous les blocs mémoire utiles, c'est-à-dire d'une part des blocs mémoire dans lesquels une écriture est possible instantanément, c'est-à-dire sans exiger un effacement préalable (il s'agit donc soit de blocs vierges n'ayant pas encore stocké de données, soit de blocs ayant subi un effacement après avoir stocké des données), d'autre part de blocs mémoire stockant actuellement des données à conserver. Quant à la table d'effacement, elle contient l'adresse de tous les blocs mémoire à effacer, ayant donc déjà subi une écriture.

Lorsqu'une application s'exécute en carte et réclame, lors du mode « sans contacts », l'écriture d'une nouvelle donnée, elle va rechercher un bloc mémoire disponible en écriture : le système d'exploitation de la carte est agencé selon l'invention pour l'orienter vers la table active dans laquelle l'application sélectionnera l'adresse d'un bloc mémoire disponible et le répertoriera comme appartenant à cette application. Puis elle écrira dans ce bloc mémoire la donnée à stocker.

En revanche, en ce qui concerne la mise à jour par l'application, lors du mode « sans contacts », d'une donnée déjà écrite, le système d'exploitation de la carte est agencé selon l'invention pour orienter à nouveau l'application vers la table active, non pas vers le bloc mémoire stockant la valeur actuelle de cette donnée conformément à un fonctionnement classique, mais vers un nouveau bloc mémoire disponible en écriture. Le système d'exploitation de la carte est agencé selon l'invention pour déplacer ensuite l'adresse du bloc mémoire stockant la valeur actuelle de cette donnée, depuis la table active vers la table d'effacement, sauf si l'application a besoin de conserver la valeur actuelle de cette donnée : cette opération permet une réutilisation ultérieure de ce bloc mémoire.

Enfin, le système d'exploitation est agencé pour que, lorsqu'une application réclame, lors du mode « sans contacts », un effacement d'une donnée, il inhibe la fonction d'effacement et remplace cette opération par un déplacement de l'adresse du bloc mémoire stockant la donnée concernée, depuis la table active vers la table d'effacement.

Le système d'exploitation est agencé pour effectuer, lors du prochain passage en mode « contacts », un effacement de tout ou partie des blocs mémoire répertoriés dans la table d'effacement. Cette opération pourra être effectuée à divers moments du mode « contacts », notamment :
- systématiquement, lors de la phase d'initialisation du mode « contacts » ;
- à tout instant où la carte est inactive (par exemple lorsqu'elle attend le résultat d'un traitement en cours dans le terminal coopérant avec la carte).
La décision d'effacer effectivement ou non un bloc mémoire répertorié dans la table d'effacement sera fonction des circonstances et des besoins.
La procédure d'effacement comprend typiquement les phases suivantes :
- lire le contenu de la table d'effacement ;
- déclencher l'effacement de tout ou partie des blocs mémoire répertoriés dans la table d'effacement ;
- mettre à jour éventuellement le contenu de la table d'effacement.
A nouveau, la décision de mettre à jour effectivement ou non la table d'effacement sera fonction des circonstances et des besoins.

Lorsqu'une demande d'effacement intervient durant le mode « contacts », elle est exécutée soit de façon habituelle, puisque ce mode ne présente pas de contraintes particulières pour cette opération, soit de la manière utilisée pour le mode « sans contacts ».

L'invention s'applique dans tous les cas où l'objet portatif comporte des moyens de connexion à distance à un appareil hôte associé, c'est-à-dire non seulement dans le cas précité où ces moyens prennent la forme d'une antenne de liaison radio, mais dans tout autre cas imaginable, tel qu'une liaison optique ou magnétique.

L'invention ne fait pas d'hypothèse sur la fréquence d'utilisation en mode « contacts » ou mode « sans contacts » et est applicable dans le cas où l'objet portatif est utilisé dans les deux modes simultanément (cas de la carte SIM sans contacts). Dans un tel cas, le système d'exploitation pourra détecter que de l'énergie est disponible via le mode « contacts » et pourra décider d'un effacement immédiat de la mémoire au sein d'une procédure d'échange de données exécutée en mode « sans contacts ».

## Revendications

1. Procédé de gestion d'une mémoire dans un objet portatif du type « mixte » dont les moyens de connexion à un appareil hôte associé comprennent à la fois des contacts galvaniques et des moyens de connexion à distance définissant ainsi un mode de fonctionnement dit mode « contacts » et un mode de fonctionnement dit mode « sans contacts », ces deux modes de fonctionnement étant éventuellement simultanés, **caractérisé en ce qu'**il comprend les étapes consistant à :
- lors de toute demande d'effacement d'un bloc mémoire, différer l'effacement et affecter à ce bloc mémoire un attribut de « bloc mémoire à effacer », si l'objet portatif est dans le seul mode « sans contacts » ; puis
- lors d'un futur passage en mode « contacts », déclencher l'effacement de tout ou partie des blocs mémoire possédant l'attribut de « bloc mémoire à effacer ».

2. Procédé selon la revendication 1, comprenant l'étape consistant, lors de toute demande d'écriture dans un bloc mémoire déterminé, à :
- renoncer à l'écriture de ce bloc mémoire s'il stocke déjà une donnée et si l'objet portatif est dans le seul mode « sans contacts » ;
- rechercher un bloc mémoire vierge et effectuer l'écriture dans celui-ci.

3. Procédé selon la revendication 2, comprenant l'étape consistant à affecter audit bloc mémoire déterminé un attribut de « bloc mémoire à effacer » si l'objet portatif est dans le seul mode « sans contacts ».
